# EUROPÄISCHE PATENTSCHRIFT

(11) **EP 0 722 995 B1**
(45) Veröffentlichungstag und Bekanntmachung des Hinweises auf die Patenterteilung: **08.09.2004**
(21) Anmeldenummer: 96100067.6
(22) Anmeldetag: 04.01.1996
(51) Int. Cl.: C09D 167/06, C08G 63/553, C08F 283/01

(54) **Ungesättigte Polyesterharze enthaltende Mischungen und ihre Verwendung**
Unsaturated polyester resin compositions and their use
Compositions de résines de polyester insaturé et leur utilisation

(30) Priorität: 17.01.1995 DE 19501176
(43) Veröffentlichungstag der Anmeldung: 24.07.1996
(73) Patentinhaber: Bayer MaterialScience AG, 51368 Leverkusen (DE)
(72) Erfinder: Meixner, Jürgen, Dr., D-47803 Krefeld (DE); Fischer, Wolfgang, Dr., D-40668 Meerbusch (DE); Müller, Manfred, D-41812 Erkelenz (DE); Rebuscini, Claudio, Dr., I-20060 Vignate (IT)

(56) Entgegenhaltungen:
- EP-A- 0 195 968
- EP-A- 0 284 888
- DE-A- 2 708 846
- LU-A- 42 334
- US-A- 3 669 716
- US-A- 5 252 682
- CHEMICAL ABSTRACTS, vol. 107, no. 12, 21.September 1987 Columbus, Ohio, US; abstract no. 98299e, XP002035111 & JP 62 114 688 A (NIPPON SYNTHETIC CHEMICAL IND. CO., LTD.) 26.Mai 1987
- CHEMICAL ABSTRACTS, vol. 118, no. 12, 22.März 1993 Columbus, Ohio, US; abstract no. 104830s, XP002035112 & ZH. PRIKL. KHIM. , Bd. 65, Nr. 6, 1992, S.-PETERBURG, Seiten 1402-7, N.G. VIDENINA ET AL.:

## Beschreibung

Die Erfindung betrifft neue, unter dem Einfluß von UV-Strahlung härtbare, ungesättigte Polyesterharze enthaltende Mischungen und ihre Verwendung zur Herstellung von Beschichtungen auf beliebigen Substraten, insbesondere auf Holz oder holzähnlichen Materialien.

Ungesättigte Polyesterharze als Bindemittel für UV-härtende Beschichtungen sind seit langem bekannt. So gibt z. B. die DE-AS 1694149 an, daß man Gemische aus ungesättigten Polyestern und polymerisierbaren Monomeren unter Zusatz von bestimmten Benzoinverbindungen unter UV-Bestrahlung aushärten kann. Durch die inhibierende Wirkung des Luftsauerstoffs sind Lackierungen auf Basis dieser Systeme oftmals an der Oberfläche nur ungenügend ausgehärtet.

Der bei konventioneller Härtung mit Peroxiden eingeschlagene Weg, zur Vermeidung der Luftinhibierung Paraffine zuzusetzen ("Paraffinpolyester"), die sich während der Gelierung an der Oberfläche anreichern, ist nur bedingt möglich, daß die von den UV-Strahlern ausgehende Wärmeenergie eine Ausbildung des schützenden Paraffinfilms verhindert. In diesen Fällen muß eine sogenannte Vorgelierzone vorgeschaltet werden.

Ungesättigte Polyester, die α,β-ungesättigte Dicarbonsäurereste und Allylether- und/oder Polyalkylenglykolreste enthalten ("Glanzpolyester") benötigen kein Paraffin zur Aushärtung der Lackfilmoberfläche, da die Ethergruppen einen autoxidativen Trocknungsprozeß auslösen. Die UV-Härtung solcher Harze mit Allylethergruppen (DE-OS 2113998) oder Polyalkylenglykolresten (DE-OS 3010428) ergibt wie bei der konventionellen Härtung gut schleifbare Lackfilme, doch ist die Reaktivität solcher Harze oftmals zu gering, um ausreichend hohe Verarbeitungsgeschwindigkeiten zu gewährleisten.

In der EP-A-0 195 968 werden härtbare Harzmassen auf Basis eines oder mehrerer ungesättigten Polyester beschrieben, die endständige Dicyclopentenylestergruppen enthalten und daher eine hohe Lagerstabilität aufweisen sollen. Die beanspruchten Polyesterharze sind jedoch für eine Härtung unter UV-Licht nicht geeignet.

Die EP-A-0 284 888 beschreibt ungesättigte Polyesterharze, die durch Einbau von u. a. Norbornendicarbonsäureresten bei gutem Verlauf schnell aushärten. Dies gilt jedoch nur bis zu einer Verarbeitungsviskosität von > 60 sec. beim Gießauftrag (DIN-Becher Nr. 4, 23 °C), die durch Verdünnung mit Styrol erzielt wird. In neuerer Zeit werden jedoch Bindemittel gefordert, die in noch größerer Verdünnung mit einer Verarbeitungsviskosität beim Gießauftrag von < 60 sec. gleich schnell aushärtbar sind, wobei die Eigenschaften der entsprechenden Lackfilme wie Härte und Kratzfestigkeit nicht schlechter werden sollten. Die geringere Viskosität erbringt Vorteile bei Entlüftung und Verlauf der Lackfilme.

Aufgabe der Erfindung war es daher, ungesättigte Polyesterharze bereitzustellen, die insbesondere zur Herstellung von unter dem Einfluß von UV-Strahlung vernetzbaren Beschichtungsmitteln geeignet sind, welche auch bei starker styrolischer Verdünnung bzw. geringer Verarbeitungsviskosität und gutem Verlauf schnell aushärten.

Überraschenderweise konnte diese Aufgabe durch die Bereitstellung nachstehend näher beschriebenen erfindungsgemäßen Polyesterharze als wesentliche Komponente enthaltenden Mischungen gelöst werden. Die erfindungsgemäße Lösung der genannten Aufgabe ist überraschend, weil die angestrebte schnellere Aushärtbarkeit auch bei starker styrolischer Verdünnung keineswegs, wie eigentlich zu erwarten gewesen wäre, nur von der Konzentration der in die Polyesterharze eingebauten olefinischen Doppelbindungen abhängig ist, sondern nur unter der Voraussetzung erreicht werden kann, daß in die Polyesterharze gleichzeitig die Aufbaukomponenten a1) und a2) in den nachstehend näher angegebenen Mengen eingebaut werden.

Gegenstand der Erfindung sind unter dem Einfluß von UV-Strahlung härtbare Mischungen aus
A) 40 bis 80 Gew.-Teile einer Polyesterharzkomponente, bestehend aus mindestens einem ethylenisch ungesättigten Polyesterharz,
B) 20 bis 60 Gew.-Teile einer Monomerkomponente, bestehend aus mindestens einem copolymerisierbaren Monomeren,
C) 0,1 bis 10 Gew.-Teilen einer Initiatorkomponente, bestehend aus mindestens einem Fotoinitiator
   und gegebenenfalls
D) an sich bekannte Hilfs- und Zusatzmittel der Beschichtungstechnologie,
dadurch gekennzeichnet, daß die Polyesterharze der Komponente A) eine Säurezahl von 0 bis 50 und eine Hydroxylzahl von 10 bis 150 aufweisen und durch Umsetzung von
a) 35 bis 50 Mol-% einer Carbonsäurekomponente, bestehend aus a1) 6 bis 30 Mol-% eines 1,2-Alkendicarbonsäuremonodicyclopentenylesters, a2) insgesamt 60 bis 94 Mol-% Fumarsäure und/oder Maleinsäure und/oder Maleinsäureanhydrid und a3) insgesamt 0 bis 15 Mol-% einer anderen Carbonsäure und/oder eines anderen Carbonsäureanhydrids
   mit
b) 50 bis 65 Mol-% einer Alkoholkomponente, bestehend aus b1) insgesamt 80 bis 95 Mol-% mindestens eines zweiwertigen Alkohols, b2) insgesamt 5 bis 20 Mol-% mindestens eines einwertigen Alkohols und b3) insgesamt 0 bis 5 Mol-% mindestens eines mindestens dreiwertigen Alkohols
hergestellt worden ist, mit der Maßgabe, daß sich die unter A) und B) genannten Gew.-Teile und die unter a) und b) gemachten Prozentangaben jeweils zu 100 ergänzen.

Gegenstand der Erfindung ist auch die Verwendung von solchen Mischungen mit einer bei 23°C im DIN-Becher Nr. 4 gemäß DIN 53211 gemessenen Verarbeitungsviskosität von unter 60 Sekunden zur Herstellung von unter dem Einfluß von UV-Strahlung auszuhärtenden Beschichtungen auf beliebigen Substraten, insbesondere auf Holz oder holzähnlichen Materialien.

Die erfindungswesentlichen Polyesterharze A) weisen eine Säurezahl von 0 bis 50, vorzugsweise 5 bis 40 mgKOH/g und eine Hydroxylzahl von 10 bis 150, vorzugsweise 10 bis 130 mgKOH/g auf.

Das dampfdruckosmometrisch bestimmbare Molekulargewicht (Zahlenmittel, Mn) liegt im allgemeinen im Bereich von 300 bis 5000, vorzugsweise 500 bis 2000.

Die Herstellung der erfindungsgemäßen Polyesterharze erfolgt nach bekannten Methoden, z. B. durch Schmelz- oder Azeotropveresterung der Alkohole und Säuren oder deren veresterungsfähigen Derivate, vgl. "Methoden der organischen Chemie" (Houben-Weyl), 4. Auflage, Bd. 14/2, Georg Thieme Verlag, Stuttgart 1961, S. 1 bis 5, 21 bis 33, 40 bis 44.

Zur Herstellung der Polyesterharze werden die Komponenten a1) bis a3) bzw. b1) bis b3) in den bereits oben genannten Mengenverhältnissen miteinander zur Reaktion gebracht. Die Komponente a) besteht aus 6 bis 30 Mol-% a1), 60 bis 94 Mol-% a2) und 0 bis 15 Mol-% a3). Die Komponente b) besteht aus 80 bis 95 Mol-% b1), 5 bis 20 Mol-% b2) und 0 bis 5 Mol-% b3).

Der 1,2-Alkenyldicarbonsäuremonodicyclopentenylester a1) stellt das Umsetzungsprodukt von Maleinsäure und Dicyclopentadien dar und wird vorzugsweise in einer Vorstufe durch Erhitzen eines Gemisches aus 1,0 Mol Maleinsäureanhydrid, 1,0 Mol Wasser und 1,0 Mol Dicyclopentadien bei Temperaturen zwischen 80 und 140°C hergestellt.

Nach Zugabe der übrigen Komponenten erfolgt die Veresterung unter Inertgasatmosphäre bei Temperaturen von 140 bis 230°C. Bei der Veresterung werden die genannten Ausgangsmaterialien im Rahmen der gemachten Offenbarung vorzugsweise in solchen Mengen eingesetzt, die einem OH/COOH-Äquivalentverhältnis von 1 : 1 bis 1,5 : 1 entsprechen, wobei die Säureanhydridgruppen als zweiwertige Reste in die Berechnung eingehen.

Bei der Komponente a2) handelt es sich um Fumarsäure, Maleinsäure und/oder Maleinsäureanhydrid.

Als Komponenten a3) bzw. als Teil der Komponente a3) geeignet sind beispielsweise gesättigte oder ungesättigte (jedoch von der Komponente a2) verschiedene) aliphatische Dicarbonsäuren mit 4 bis 10 Kohlenstoffatomen wie Bernsteinsäure, Adipinsäure, Sebacinsäure, Itaconsäure und/oder Anhydride derartiger Säuren, cycloaliphatische Dicarbonsäuren oder Dicarbonsäureanhydride mit 8 bis 10 Kohlenstoffatomen wie beispielsweise Tetrahydrophthalsäure, Hexahydrophthalsäure oder Norbornendicarbonsäure bzw. deren Anhydride, aromatische Dicarbonsäuren mit 8 Kohlenstoffatomen oder deren Anhydride wie beispielsweise Phthalsäure, Phthalsäureanhydrid, Isophthalsäure oder Terephthalsäure oder aber auch aliphatische, cycloaliphatische und/oder aromatische Monocarbonsäuren mit 2 bis 10 Kohlenstoffatomen wie beispielsweise Benzoesäure, Essigsäure, Cyclohexancarbonsäure oder 2-Ethylhexansäure.

Als Komponente b1) bzw. als Teil der Komponente b1) geeignet sind beispielsweise zweiwertige Alkohole mit 2 bis 15 Kohlenstoffatomen wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol verwendet werden. Bevorzugt sind Ethylenglykol, Propandiol-1,2, Propandiol-1,3, Diethylenglykol und/oder Dipropylenglykol.

Als Komponente b2) bzw. als Teil der Komponente b2) geeignet sind einwertige Alkohole mit 1 bis 12 Kohlenstoffatomen wie beispielsweise Methanol, Ethanol, n-Hexanol, Isooctanol, n-Decanol, Butyldiglykol oder Benzylalkohol.

Als Komponente b3) bzw. als Teil der Komponente b3) geeignet sind beispielsweise 3- bis 4-wertige Alkohole mit 3 bis 20 Kohlenstoffatomen wie Glycerin, Trimethylolpropan, Pentaerythrit oder deren Ethergruppen aufweisenden Alkoxylierungsprodukte mit bis zu 20 Kohlenstoffatomen.

Um die Polyesterharze vor unerwünschter vorzeitiger Polymerisation zu bewahren, ist es oft empfehlenswert, bereits bei ihrer Herstellung 0,001 bis 0,1 Gew.-%, bezogen auf das Gewicht der Ausgangsmaterialien zur Herstellung der Polyester, an bekannten Polymerisationsinhibitoren oder Antioxidantien, wie z. B. die für diesen Zweck üblicherweise eingesetzten Chinone, Hydrochinone, Kupferverbindungen, Phosphite, Amine oder Phenole mitzuverwenden.

Als Komponente B) liegt in den erfindungsgemäßen Mischungen vorzugsweise Styrol vor. Jedoch auch andere copolymerisierbare Monomere wie z.B. (Meth)Acrylsäureester und Vinylethergruppen haltige Monomere können als Komponente B) bzw. als Teil der Komponente B) verwendet werden.

Als Fotoinitiatoren C) sind die üblicherweise eingesetzten Verbindungen geeignet, wie sie z. B. in "Methoden der organischen Chemie" (Houben-Weyl), Band E 20, Seite 80 ff., Georg Thieme Verlag, Stuttgart 1987, beschrieben sind.

Gut geeignet sind z. B. Benzoinether wie Benzoinisopropylether, Benzilketale, wie z.B. Benzildimethylketal und Hydroxyalkylphenone, wie z. B. 1-Phenyl-2-hydroxy-2-methylpropan-1-on, sowie Benzophenon und dessen Derivate.

Die erwähnten Fotoinitiatoren, die in Mengen von 0,1 bis 10 Gew.-%, vorzugsweise 0,1 bis 5 Gew.-%, bezogen auf das Gewicht der erfindungsgemäßen Mischungen eingesetzt werden, können als einzelne Substanz oder, wegen häufiger vorteilhafter synergistischer Effekte, auch in Kombination miteinander verwendet werden.

Die erfindungsgemäßen Mischungen können als weitere Zusätze D) u. a. Inhibitoren, Metallverbindungen, Träger- und Füllstoffe sowie Thixotropiermittel, Verlaufsmittel, Glätt- und Mattierungsmittel enthalten.

Die erfindungsgemäßen Mischungen eignen sich insbesondere als Beschichtungsmittel für geeignete Substrate wie insbesondere Holz, Papier, Kunststoffolien und Kartonagen. Die Verarbeitung kann nach allen aus der Lacktechnologie üblichen Methoden wie Gießen, Spritzen und Walzen erfolgen. Oftmals unterscheidet sich die "Lieferform" der erfindungsgemäßen Mischungen von der letztendlich zum Einsatz gelangenden "Verarbeitungsform" durch einen viskositätserniedrigenden Zusatz einer weiteren Menge der Komponente B), insbesondere Styrol, jedoch liegt die Zusammensetzung sowohl der "Lieferform" als auch der "Verarbeitungsform" bezüglich ihrer Zusammensetzung innerhalb der oben genannten Grenzen.

In den nachfolgenden Beispielen beziehen sich alle Prozentangaben auf Gewichtsprozente.

### Beispiele

### Maleinsäuremonodicyclopentenylester a1)

1,0 Mol Maleinsäureanhydrid und 1,0 Mol Dicyclopentadien werden unter Durchleiten von Stickstoff auf 60 °C erhitzt. Nach Zugabe von 1,0 Mol Wasser wird auf 120 °C aufgeheizt und 4 Stunden bei 120 °C gehalten.

### Beispiele 1 bis 5 sowie Vergleichsbeispiele 6 bis 9

Die Rohstoffe der Tabelle 1 werden zusammen mit 0,02 %, bezogen auf 100 % Feststoff, Toluhydrochinon unter Durchleiten von Stickstoff auf 190 °C aufgeheizt und bei dieser Temperatur gehalten, bis eine Viskosität (70%ig in Styrol, DIN-Becher Nr. 4, 23 °C) von ca. 150 sec. erreicht ist. Bei dieser Viskosität wird die Temperatur auf 160 °C gesenkt und bei dieser Temperatur gehalten, bis zu einer Endviskosität (70%ig in Styrol, 23°C) von ca. 200 sec. Nach Abkühlen auf 100 °C werden die entstandenen Produkte 70%ig in Styrol gelöst.

Die Säurezahlen der 70%ig in Styrol gelösten Produkte lagen, bezogen auf Festharz, zwischen 10 und 30 mg KOH/g, die Hydroxylzahlen, bezogen auf Festharz, zwischen 10 und 60 mg KOH/g.

**Tabelle 1**

| **Rohstoffe (Mol)** | **Erfindungsgemäße Beispiele** | | | | | **Vergleichsbeispiele** | | | |
|---|---|---|---|---|---|---|---|---|---|
| | 1 | 2 | 3 | 4 | 5 | 6 | 7 | 8* | 9** |
| Maleinsäuremonodicyclopentenylester | 0,15 | 0,15 | 0,22 | 0,28 | 0,08 | 0,15 | | 0,075 | |
| Maleinsäureanhydrid | | 0,92 | 0,89 | 0,86 | 0,96 | 0,20 | 1,00 | | 0,70 |
| Fumarsäure | 0,92 | | | | | | | 0,057 | |
| Adipinsäure | | | | | | 0,72 | | 0,943 | |
| Norbomendicarbonsäure | | | | | | | | | 0,30 |
| Ethylenglykol | 0,70 | 0,70 | 0,70 | 0,70 | 0,70 | 0,70 | 0,70 | | 0,70 |
| Diethylenglykol | 0,30 | | 0,30 | 0,30 | 0,30 | 0,30 | 0,30 | | 0,30 |
| Benzylalkohol | | 0,15 | 0,15 | 0,15 | 0,15 | 0,15 | 0,15 | | 0,20 |
| Butyldiglykol | 0,05 | 0,05 | 0,05 | 0,05 | 0,05 | 0,05 | 0,05 | | |
| Cyclohexanol | 0,17 | | | | | | | | |
| Neopentylglykol | | | | | | | | 1,038 | |
| 1,2-Propandiol | | 0,30 | | | | | | | |

| | | | | | | | | | |
|---|---|---|---|---|---|---|---|---|---|
| * Entspricht Beispiel 1 c der EP 195 968 | | | | | | | | | |
| ** Entspricht Beispiel 1 der EP 284 888 | | | | | | | | | |

Nach Zugabe von 3 Gew.-Teilen Benzildimethylketal, 2 Gew.-Teilen eines handelsüblichen Verlaufsmittels (1%ige Lösung in Toluol eines Siliconöls, ®Baysilon-Lackadditiv-PL, Hersteller: Bayer AG, Leverkusen) und soviel Teilen Styrol, daß eine Verarbeitungsviskosität von 40 sec. (DIN-Becher Nr. 4, 23 °C) erreicht wird, wurden die Mischungen durch Gießen in einer Schichtdicke von 250 µm auf Holz aufgetragen. Gehärtet wurde unter 2 IST-Strahlern (Impulsstrahler der Fa. IST-Strahlentechnik, Leistung 80 Watt/cm, Strahlerabstand 20 cm) mit 3 m/Min. Bandgeschwindigkeit.

Die nachstehende Tabelle 2 verdeutlicht die hervorragende Härte der erfindungsgemäßen Beispiele 1 bis 5 bei gutem Verlauf und guter Kratzfestigkeit. Die Vergleichsbeispiele 6 und 7 zeigen anschaulich, daß es nicht genügt, die Beschleunigung der Durchhärtung des Styrol-verdünnten Beschichtungsmittels gemäß Vergleichsbeispiel 6 durch Erhöhung der Konzentration an Doppelbindungen (erhöhte Konzentration an Maleinsäure in Vergleichbeispiel 7) zu erhöhen. Aus Vergleichsbeispiel 9 geht hervor, daß auch die Kombination Maleinsäureanhydrid/Norbornendicarbonsäure zur Lösung des Problems ungeeignet ist. Erst die erfindungsgemäße Kombination von Maleinsäuremonodicyclopentenylester mit Maleinsäureanhydrid bzw. Fumarsäure führt auch Styrol-verdünnt zu schnell durchhärtenden Beschichtungen.

**Tabelle 2**

| | Erfindungsgemäße Beispiele | | | | | Vergleichsbeispiele | | | |
|---|---|---|---|---|---|---|---|---|---|
| | 1 | 2 | 3 | 4 | 5 | 6* | 7** | 8* | 9 |
| Verlauf¹⁾ | 0 | 0 | 0 | 0-1 | 0 | | 0 | | 0-1 |
| Kratzfestigkeit²⁾ | 0 | 0 | 0-1 | 0 | 0-1 | | 3 | | 3 |
| Härte (sec.)³⁾ | 120 | 130 | 108 | 111 | 105 | | 55 | | 17 |

| | | | | | | | | | |
|---|---|---|---|---|---|---|---|---|---|
| * Lackfilme konnten nicht geprüft werden, da Oberfläche klebrig (nicht ausgehärtet) | | | | | | | | | |
| ** Lackfilme milchig-trübe | | | | | | | | | |
| 1) Skala 0 bis 5 0 = sehr guter Verlauf 5 = kein Verlauf | | | | | | | | | |
| 2) Skala 0 bis 5 (Nagelhärte) 0 = sehr gute Kratzfestigkeit 5 = keine Kratzfestigkeit | | | | | | | | | |
| 3) Die Härte wurde nach König (DIN 53157/Pendeldämpfung) bestimmt. | | | | | | | | | |

## Patentansprüche

1. Unter dem Einfluss von UV-Strahlung härtbare Mischungen aus
A) 40 bis 80 Gew.-Teile einer Polyesterharzkomponente, bestehend aus mindestens einem ethylenisch ungesättigten Polyesterharz,
B) 20 bis 60 Gew.-Teile einer Monomerkomponente, bestehend aus mindestens einem copolymerisierbaren Monomeren,
C) 0,1 bis 10 Gew.-Teilen einer Initiatorkomponente, bestehend aus mindestens einem Fotoinitiator
und gegebenenfalls
D) an sich bekannte Hilfs- und Zusatzmittel der Beschichtungstechnologie,
**dadurch gekennzeichnet, dass** die Polyesterharze der Komponente A) eine Säurezahl von 0 bis 50 und eine Hydroxylzahl von 10 bis 150 aufweisen und durch Umsetzung von
a) 35 bis 50 mol% einer Carbonsäurekomponente, bestehend aus
a1) 6 bis 30 mol-% eines 1,2-Alkendicarbonsäuremonodicyctopentenylesters,
a2) insgesamt 60 bis 94 mol-% Fumarsäure und/oder Maleinsäure und/oder Maleinsäureanhydrid und
a3) insgesamt 0 bis 15 mol-% einer anderen Carbonsäure und/oder eines anderen Carbonsäureanhydrids
mit
b) 50 bis 65 mol-% einer Alkoholkomponente, bestehend aus
b1) insgesamt 80 bis 95 mol-% mindestens eines zweiwertigen Alkohols,
b2) insgesamt 5 bis 20 mol-% mindestens eines einwertigen Alkohols und
b3) insgesamt 0 bis 5 mol-% mindestens eines mindestens dreiwertigen Alkohols
hergestellt worden ist, mit der Maßgabe, dass sich die unter A) und B) genannten Gew.-Teile und die unter a) und b) gemachten Prozentangaben jeweils zu 100 ergänzen.

2. Mischungen gemäß Anspruch 1, **dadurch gekennzeichnet, dass** die Komponente B) aus Styrol besteht.

3. Verwendung von Mischungen gemäß Anspruch 1 und 2 mit einer bei 23°C im DIN-Becher Nr. 4 gemäß DIN 53 211 gemessenen Verarbeitungsviskosität von unter 60 Sekunden zur Herstellung von unter dem Einfluss von UV-Strahlung auszuhärtenden Beschichtungen auf beliebigen Substraten.

4. Verwendung gemäß Anspruch 4 zur Beschichtung von Holz oder holzähnlichen Materialien.

5. Substrate beschichtet mit aus Mischungen gemäß Ansprüchen 1 und 2 erhältlichen Beschichtungen.

## Claims

1. Mixtures which may be cured under the action of UV radiation, of
A) 40 to 80 parts by weight of a polyester resin component consisting of at least one ethylenically unsaturated polyester resin,
B) 20 to 60 parts by weight of a monomer component consisting of at least one copolymerisable monomer,
C) 0.1 to 10 parts by weight of an initiator component consisting of at least one photoinitiator
and optionally
D) *per* se known coating technology auxiliary substances and additives,
**characterised in that** the component A) polyester resins have an acid value of 0 to 50 and a hydroxyl value of 10 to 150 and were produced by reacting
a) 35 to 50 mol.% of a carboxylic acid component, consisting of
a1) 6 to 30 mol.% of a 1,2-alkene dicarboxylic acid dicyclopentenyl ester,
a2) a total of 60 to 94 mol.% of fumaric acid and/or maleic acid and/or maleic anhydride and
a3) a total of 0 to 15 mol.% of another carboxylic acid and/or another carboxylic anhydride
with
b) 50 to 65 mol.% of an alcohol component, consisting of
b1) a total of 80 to 95 mol.% of at least one dihydric alcohol,
b2) a total of 5 to 20 mol.% of at least one monohydric alcohol and
b3) a total of 0 to 5 mol.% of at least one at least trihydric alcohol,
providing that the parts by weight stated under A) and B) and the percentages given under a) and b) each add up to 100.

2. Mixtures according to claim 1, **characterised in that** component B) consists of styrene.

3. Use of mixtures according to claims 1 and 2 with an application viscosity of less than 60 seconds measured at 23°C in a DIN 4 cup to DIN 53 211 for the production of coatings to be cured under the action of UV radiation on any desired substrates.

4. Use according to claim 4 for coating wood or wood-like materials.

5. Substrate coated with coatings obtainable from mixtures according to claims 1 and 2.

## Revendications

1. Mélanges durcissables sous l'influence d'un rayonnement UV de
A) 40 à 80 parties en masse d'un composant résine de polyester consistant en au moins une résine de polyester éthyléniquement insaturée,
B) 20 à 60 parties en masse d'un composant monomère consistant en au moins un monomère copolymérisable,
C) 0,1 à 10 parties en masse d'un composant initiateur consistant en au moins un photo-initiateur,
et éventuellement
D) des adjuvants et additifs de la technologie des revêtements qui sont connus en soi
**caractérisés en ce que** les résines de polyester du composant A) présentent un indice d'acide de 0 à 50 et un indice d'hydroxyle de 10 à 150 et ont été produites par réaction de
a) 35 à 50 mol % d'un composant acide carboxylique consistant en a1) 6 à 30 mol % d'un monodicyclopenténylester d'acide 1,2-alcène-dicarboxylique, a2) au total 60 à 94 mol % d'acide fumarique et/ou d'acide maléique et/ou d'anhydride maléique et a3) au total 0 à 15 mol % d'un autre acide carboxylique et/ou d'un autre anhydride d'acide carboxylique
avec
b) 50 à 65 mol % d'un composant alcool consistant en b1) au total 80 à 95 mol % d'au moins un alcool difonctionnel, b2) au total 5 à 20 mol % d'au moins un alcool monofonctionnel et b3) au total 0 à 5 mol % d'au moins un alcool au moins trifonctionnel, avec la condition que les parties en masse citées en A) et B) et les indications de pourcentage faites en a) et b) totalisent dans chaque cas 100.

2. Mélanges selon la revendication 1, **caractérisés en ce que** le composant B) consiste en styrène.

3. Utilisation de mélanges selon les revendications 1 et 2 avec une viscosité de traitement, mesurée à 23°C dans un bécher DIN n°4 selon DIN 53211, inférieure à 60 s pour la production de revêtements durcissant sous l'influence d'un rayonnement UV sur des substrats quelconques.

4. Utilisation selon la revendication 4 pour le revêtement du bois ou de matériaux analogues au bois.

5. Substrats revêtus de revêtements pouvant être obtenus à partir de mélanges selon les revendications 1 et 2.
